(19) Europäisches Patentamt / European Patent Office / Office européen des brevets

(11) **EP 3 076 713 A1**

(12) **EUROPEAN PATENT APPLICATION**

(43) Date of publication:
05.10.2016 Bulletin 2016/40

(51) Int Cl.:
*H04W 40/26* (2009.01)          *H04W 36/22* (2009.01)
*H04W 40/24* (2009.01)          *H04W 84/18* (2009.01)

(21) Application number: 15161940.0

(22) Date of filing: 31.03.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicants:
• **Mitsubishi Electric R&D Centre Europe B.V.**
**1119 NS  Schiphol Rijk (NL)**
Designated Contracting States:
**FR**
• **Mitsubishi Electric Corporation**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **Khanfouci, Mourad**
**35708 RENNES Cedex 7 (FR)**
• **Brunel, Loïc**
**35708 RENNES Cedex 7 (FR)**

(74) Representative: **Le Guen-Maillet**
**5, place de Newquay**
**BP 70250**
**35802 Dinard Cedex (FR)**

(54) **METHOD AND A SYSTEM FOR MANAGING ROUTING OF PACKETS IN A WIRELESS CELLULAR TELECOMMUNICATION NETWORK**

(57)    The present invention concerns a method for managing routing of packets in a wireless cellular telecommunication network, the packets being related to a data communication for at least one mobile terminal. The method comprises the steps of :
- determining a graph representing the topology of the wireless cellular telecommunication network, the graph being formed of nodes associated to base stations of the wireless cellular telecommunication network and of edges having associated weights and linking the nodes,
- determining metrics for the nodes, the metrics being determined from the weights,
- selecting, for routing the packets, base stations acting as mobility anchors and data forwarding base stations from the determined metrics,
- determining mobility areas for the mobility anchors.

Fig. 4

## Description

The present invention relates generally to a method and a system for managing routing of packets in a wireless cellular telecommunication network, the packets being related to a data communication for a mobile terminal.

Mobility management is an important task in wireless cellular telecommunication networks. Mobility management consists in routing the packets to the mobile terminals during their mobility through communication tunnels, matching the quality of service requirements of the mobile terminals. In current Long Term Evolution network architecture, the management of the routing of the packets, named user plane, as well as the control information needed to setup the communication tunnels, named control plane, are both centralized in a central user plane mobility anchor and in a mobility management entity for the control plane.

During handovers, the mobile terminals of base stations they are attached to change their attachment base stations.

A mobile terminal is attached to a base station when it can establish, receive, continue a communication through the base station with a remote telecommunication device.

The increase of the network traffic, heterogeneity and mobility needs have led to the development of dynamic mobility management schemes among which dynamic mobility anchoring.

In dynamic mobility anchoring, the mobility anchor for data communication of a mobile terminal is distributed to the base stations in order to reduce the handover delay and improve the reactivity of the mobility management system as a whole.

When a mobile terminal is moving from a source to a target base station, the source base station is acting as mobility anchor for the packets of the moving mobile terminal and forwards these packets to the target base station i.e. the forwarding base station. The forwarding base station forwards the data to the mobile terminal or to another forwarding base station. The data forwarding operation may create shortcut that improves the handover latency and reduces signalling over the core network

An important feature of the dynamic mobility management schemes is that the target base station should be provided with information needed by the mobile terminal to establish tunnel with target base station.

However, dynamic mobility management schemes do not support global mobility and the complexity of the management is increased since both binding and location update are needed for moving mobile terminals.

Another important drawback of dynamic mobility management schemes is the lack of backward compatibility since the base stations must be upgraded for supporting dynamic mobility management. No distributed mobility management solution is known for wireless cellular telecommunication networks where both dynamic mobility management schemes capable base stations and regular base stations are deployed.

To that end, the present invention concerns a method for managing routing of packets in a wireless cellular telecommunication network, the packets being related to a data communication for at least a mobile terminal, characterized in that the method comprises the steps of :

- determining a graph representing the topology of the wireless cellular telecommunication network, the graph being formed of nodes associated to base stations of the wireless cellular telecommunication network and of edges having associated weights and linking the nodes,
- determining metrics for the nodes, the metrics being determined from the weights,
- selecting, for routing the packets base stations acting as mobility anchors and data forwarding base stations from the determined metrics,
- determining mobility areas for the mobility anchors.

The present invention also concerns a system for managing routing of packets in a wireless cellular telecommunication network, the packets being related to a data communication for at least a mobile terminal, characterized in that the system comprises :

- means for determining a graph representing the topology of the wireless cellular telecommunication network, the graph being formed of nodes associated to base stations of the wireless cellular telecommunication network and of edges having associated weights and linking the nodes,
- means for determining metrics for the nodes, the metrics being determined from the weights,
- means for selecting, for routing the packets, base stations acting as mobility anchors and data forwarding base stations from the determined metrics,
- means for determining mobility areas for the mobility anchors.

Thus, the present invention is reducing the signalling with the core network of the wireless cellular telecommunication network since the mobility management is moved into the base stations.

According to a particular feature, the method comprises further steps of :

- checking if a topology update needs to be performed and if a topology update,
- selecting base stations acting as mobility anchors and data forwarding base stations from the determined metrics,
- determining mobility areas for the mobility anchors.

Thus, the present invention is increasing the flexibility and the reactivity of the mobility management to the actual traffic variation in the wireless cellular telecommunication network since the mobility areas and mobility anchors are determined as function of the actual topology.

According to a particular feature, the method is executed by a management entity of the wireless cellular telecommunication network.

Thus, the performance and complexity are reduced when compared to state of the art centralized mobility management.

According to a particular feature, the steps of determining the graph, the metrics are executed by a management entity of the wireless cellular telecommunication network and the steps of selecting base stations and determining mobility areas are executed by the base stations.

Thus, flexibility for handling traffic variations is increased when compared to state of the art centralized mobility management.

According to a particular feature, the method is executed by the base stations.

Thus, the reactivity of the distributed mobility management proposed by the invention is further improved, complexity is reduced and signalling is reduced with the base station acting as mobility anchor.

According to a particular feature, an edge (i,j) is connecting two nodes of the graph if the associated base station to the node i is receiving signals from the base station associated to the node j with signal to interference and noise ratio above a predefined threshold and/or the base station associated to the node j is receiving signals from the base station associated to the node i with signal to interference and noise ratio above a predefined threshold or an edge (i,j) is connecting two nodes of the graph if the associated base station to the node i is receiving signals from the base station associated to the node j with a reference signals received power upper than a predefined threshold and/or the base station associated to the node j is receiving signals from the base station associated to the node i with a reference signals received power upper than a predefined threshold or an edge (i,j) is connecting two nodes of the graph if at least one mobile terminal attached to the base station associated to the node i is receiving signals from the base station associated to the node j with a signal to interference and noise ratio above a predefined threshold and/or at least one mobile terminal attached to the base station associated to the node j is receiving signals from the base station associated to the node i with a signal to interference and noise ratio above a predefined threshold or if at least one mobile terminal attached to the base station associated to the node i is receiving signals from the base station associated to the node j with reference signals received power above a predefined threshold and/or at least one mobile terminal attached to the base station associated to the node j is receiving signals from the base station associated to the node i with reference signals received power above a predefined threshold.

Thus, the distributed mobility management scheme is adapted to the current traffic in the network and the management of packets related to a data communication for a et least one mobile terminal routing in the wireless cellular telecommunication network is optimized.

According to a particular feature, the weight w(i,j) associated to the edge (i,j) is the maximum of the delays for data forwarding from base station associated to the node i to the base station associated to the node j and from base station associated to the node j to base station associated to the node i or the weight w(i,j) associated to the edge (i,j) is the maximum of a first and a second calculated products. The first product is the multiplication of the delay for data forwarding from base station associated to the node i to associated to the node j by the delay of performing an handover from the base station associated to the node i to associated to the node j and the second product is the multiplication of the delay for data forwarding from base station associated to the node j to the base station associated to the node i by the delay of performing an handover from the base station associated to the node j to the base station associated to the node j or the weight w(i,j) associated to the edge (i,j) is a convex function of the delays for tunnels establishment and delays for path switch from base station associated to the node i to the base station associated to the node j or is a convex function of the delays for tunnels establishment and delays for path switch to from base station associated to the node j to the base station associated to the node i or the weight w(i,j) associated to the edge (i,j) is obtained from the average mobility gradients and delay for data forwarding between the base stations associated to the nodes i and j.

Thus, the distributed mobility management scheme proposed by the invention improves the overall mobility performance by minimizing the packets related to a data communication for at least one mobile terminal routing delay in the wireless cellular telecommunication network.

According to a particular feature, the metric for the node i is the average normalized number of shortest paths from one node s to one node t passing through the node i, the shortest path for the node i being determined from the sum of the weights associated to the edges of the path or the metric is for the node i the inverse of the average of the minimum distance from the node i to any other node in the graph, the minimum distance being determined from the sum of the weights associated to the edges of a path or that the metric for the node i is the inverse of the maximum over all minimum distances from the node i to any other node in the graph, the distance of a path being determined from the sum of the weights associated to the edges of the path or the metric for the node i is an eigenvector of a global topology matrix, obtained from mobility parameters and/or data forwarding costs.

Thus, the distributed mobility management scheme proposed by the invention reduces the complexity with respect to centralized mobility management scheme since it is providing base station specific mobility management metric that is dependent on the global network topology.

According to a particular feature, the base stations acting as mobility anchors are chosen as the one corresponding to the nodes having the metric value upper than a predetermined value.

Thus, the management of packets related to a data communication for at least one mobile terminal routing in the wireless cellular telecommunication network optimized and handover latency is reduced.

According to a particular feature, the data forwarding base stations are chosen as the one corresponding to the nodes with the lowest metric among the nodes of the graph or having the metric value lower than a predetermined value.

Thus, the handover failure is minimized and load is balanced between the mobility anchors and data forwarding base stations during the packets routing operation in the wireless cellular telecommunication network.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computer programs are the same as those set out above related to the methods and apparatus according to the invention, they will not be repeated here.

The characteristics of the invention will emerge more clearly from a reading of the following description of an example embodiment, the said description being produced with reference to the accompanying drawings, among which :

Fig. 1 represents a wireless cellular telecommunication network in which the present invention is implemented;

Fig. 2 is a diagram representing the architecture of a management entity in which the present invention is implemented according to a first and second modes of realization;

Fig. 3 is a diagram representing the architecture of a base station in which the present invention is implemented according to a second and third modes of realization;

Fig. 4 discloses an example of an algorithm executed by a management entity according to the first mode of realization of the present invention;

Fig. 5 discloses an example of an algorithm executed by a management entity according to the second mode of realization of the present invention;

Fig. 6 discloses an example of an algorithm executed by a base station according to the second mode of realization of the present invention;

Fig. 7 discloses an example of an algorithm executed by a base station according to the third mode of realization of the present invention;

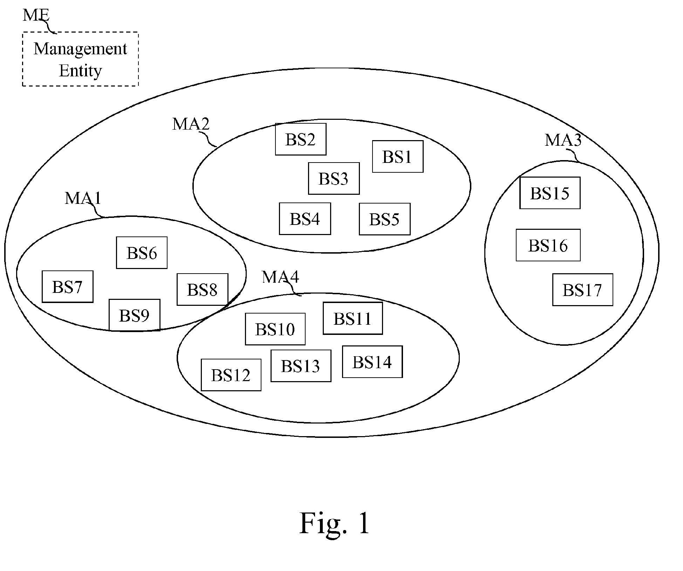

**Fig. 1** represents a wireless cellular telecommunication network in which the present invention is implemented.

The wireless cellular telecommunication network comprises, according to the first and second modes of realization, a management entity ME and comprises plural base stations noted BS1 to BS17 according to the first, second and third modes of realization of the present invention.

The management entity ME, the base stations BS are linked together through a telecommunication network not shown in Fig. 1 for the sake of clarity.

The base stations BS radiate signals in their respective cell that can be received and processed by mobile terminals located in the area of their cells. The base stations BS receive and are able to process signals transferred by mobile terminals MT located in their respective cell.

The wireless cellular telecommunication network comprises, in the example of Fig. 1, plural mobility areas noted MA1 to MA4 that are defined according to the present invention. In each mobility area MA1 to MA4, one or plural base stations BS comprised in the mobility area are determined, according to the present invention, as acting as a mobility anchor of the mobility area.

The mobility area MA1 comprises the bases stations BS6 to BS9.

The mobility area MA2 comprises the bases stations BS1 to BS5.

The mobility area MA3 comprises the bases stations BS15 to BS17.

The mobility area MA1 comprises the bases stations BS10 to BS14.

The present invention splits the wireless cellular telecommunication network coverage area into several mobility areas where each mobility area is formed of at least one base station acting as a mobility anchor and data forwarding base stations.

The at least one base station BS acting as a mobility anchor of the mobility area is connected to the core network of the wireless cellular telecommunication network and sends the data packets of the moving mobile terminals the mobility anchor is in charge of to the mobile terminals attached to the base station acting as the mobility anchor or sends the data packets to forwarding base station the mobile terminal is attached to. The base station acting as a mobility anchor forwards the packets of the moving mobile terminal to the base station the moving mobile terminal is connected to after one or plural handovers as far as the base station BS acting as a mobility anchor is in charge of the moving mobile terminal.

The base station acting as a mobility anchor is considered by the core network of the wireless cellular telecommunication network as the base station the mobile terminal is attached to.

The base station acting as a mobility anchor is able to establish tunnels through the telecommunication network in order to transfer data to forwarding base station the mobile terminal is attached to.

The base station acting as a mobility anchor manages totally or partially a mobility area MA.

When the mobility anchor function is relocated, either within a mobility area or between mobility areas, the connection with the core network of the wireless cellular telecommunication network is changed from the base station previously acting as the mobility anchor to a new base station now acting as the mobility anchor.

The present invention defines the base stations acting as mobility anchors and the data forwarding base stations in the wireless cellular telecommunication network. The most central base stations are the mobility anchors while the least central base stations or all other base stations are data forwarding base stations. The centrality metric is calculated over a graph or a weighted graph representation of the wireless cellular telecommunication network. Then, centrality metric is used to allocate the mobility anchors function and/or the data forwarding base station function.

The mobility areas as well as the mobility anchor functions may be locally updated in order to cope with local traffic variations and topology change. For example, the base station acting as mobility anchor may decide to increase/decrease the size of its mobility area MA, based on local traffic mobility measurements. The base station acting as mobility anchor may decide, based on local topology and centrality calculations to trigger mobility anchor change and/or adapt the size of the mobility area.

According to the invention:

- a graph representing the topology of the wireless cellular telecommunication network is determined, the graph is formed of nodes associated to base stations of the wireless cellular telecommunication network and of edges having associated weights and linking the nodes,
- metrics are determined for the nodes, the metrics are determined from the weights,
- base stations acting as mobility anchors and data forwarding base stations are selected for routing the packets,
- mobility areas are determined for the mobility anchors.

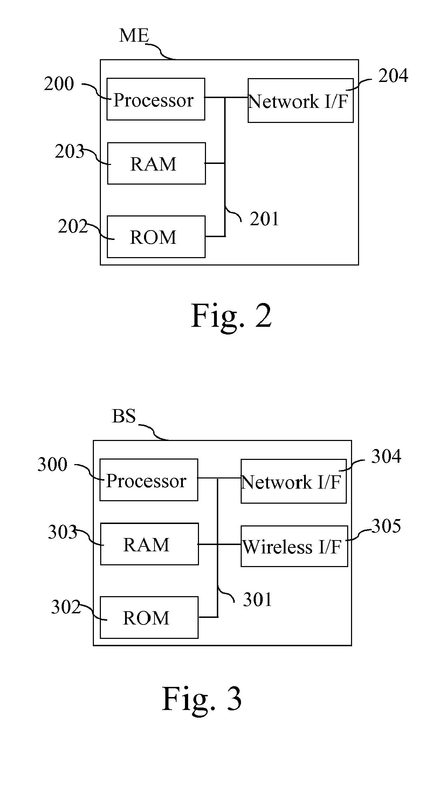

**Fig. 2** is a diagram representing the architecture of a management entity in which the present invention is implemented according to a first and second modes of realization.

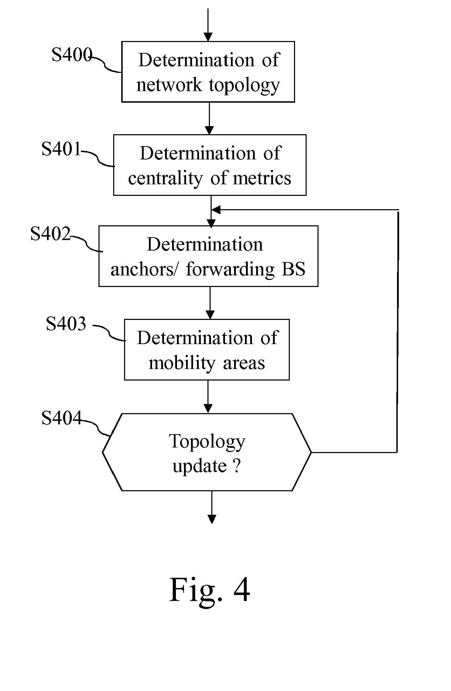

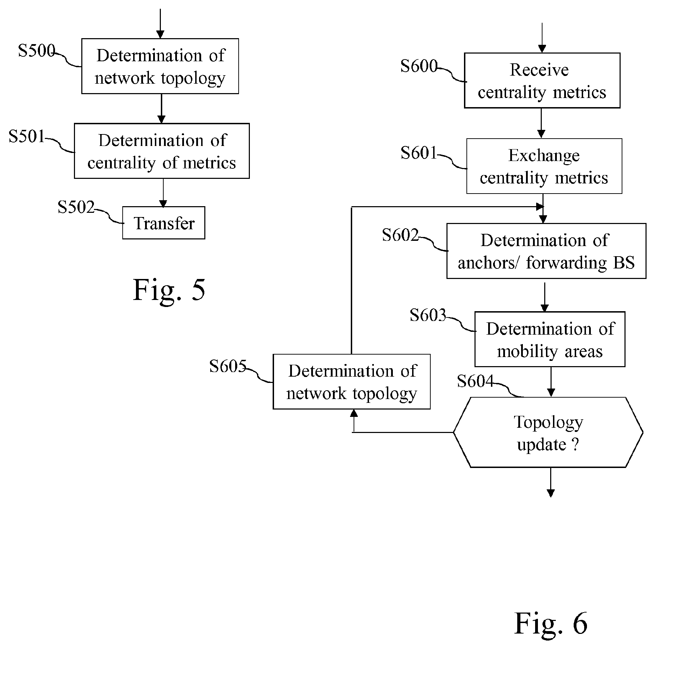

The management entity ME has, for example, an architecture based on components connected together by a bus 201 and a processor 200 controlled by the programs as disclosed in Fig. 4 or 5.

It has to be noted here that the management entity ME may have an architecture based on dedicated integrated circuits.

The bus 201 links the processor 200 to a read only memory ROM 202, a random access memory RAM 203 and a network interface 204.

The memory 203 contains registers intended to receive variables and the instructions of the program related to the algorithm as disclosed in Fig. 4 or 5.

The read only memory 202 contains instructions of the program related to the algorithm as disclosed in Fig. 4 or 5, which are transferred, when the management entity ME is powered on, to the random access memory 203.

Any and all steps of the algorithm described hereafter with regard to Fig. 4 or 5 may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

In other words, the management entity ME includes circuitry, or a device including circuitry, causing the management entity ME to perform the steps of the algorithm described hereafter with regard to Fig. 4 or 5.

Such a device including circuitry causing the management entity ME to perform the steps of the algorithms described hereafter with regard to Fig. 4 or 5 may be an external device connectable to the management entity ME.

**Fig. 3** is a diagram representing the architecture of a base station in which the present invention is implemented according to a second and third modes of realization.

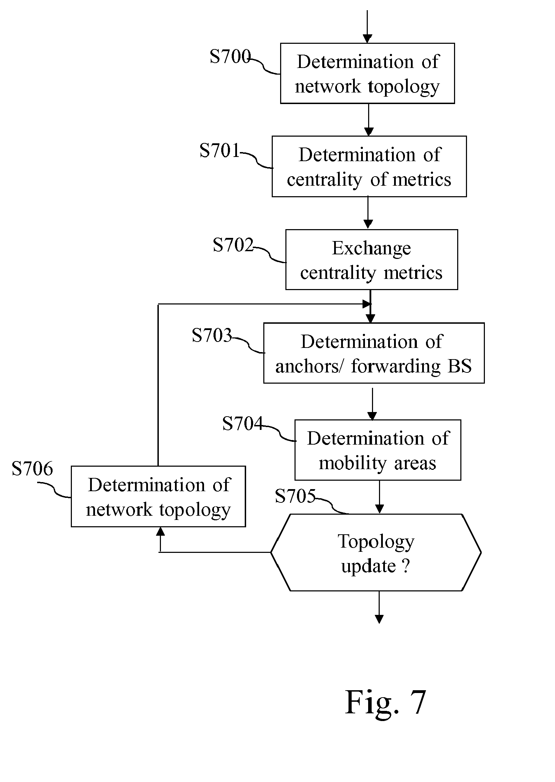

The base station BS has, for example, an architecture based on components connected together by a bus 301 and a processor 300 controlled by the programs as disclosed in Fig. 6 or 7.

It has to be noted here that the base station BS may have an architecture based on dedicated integrated circuits.

The bus 301 links the processor 300 to a read only memory ROM 302, a random access memory RAM 303, a network interface 304 and a wireless interface 305.

The memory 303 contains registers intended to receive variables and the instructions of the program related to the algorithm as disclosed in Fig. 6 or 7.

The processor 300 controls the operation of the wireless interface 305 and the network interface 305.

The read only memory 302 contains instructions of the program related to the algorithm as disclosed in Fig. 6 or 7, which are transferred, when the base station BS1 is powered on, to the random access memory 303.

Any and all steps of the algorithm described hereafter with regard Fig. 6 or 7 may be implemented in software by execution of a set of instructions or program by a programmable computing machine, such as a PC (*Personal Computer*), a DSP (*Digital Signal Professor*) or a microcontroller; or else implemented in hardware by a machine or a dedicated component, such as an FPGA (*Field-Programmable Gate Array*) or an ASIC (*Application-Specific Integrated Circuit*).

In other words, the base station BS includes circuitry, or a device including circuitry, causing the base station BS to perform the steps of the algorithm described hereafter with regard to Fig. 6 or 7.

Such a device including circuitry causing the base station BS to perform the steps of the algorithm described hereafter with regard to Fig. 6 or 7 may be an external device connectable to the base station BS.

**Fig. 4** discloses an example of an algorithm executed by a management entity according to the first mode of realization of the present invention.

More precisely, the present algorithm is executed by the processor 200 of the management entity ME.

At step S400, the processor 200 determines the wireless cellular telecommunication network topology using a graph.

A graph is a representation of a set of objects and relations between the objects, here base stations, where some pairs of objects are connected by links, i.e. related. The interconnected objects are represented by mathematical abstractions called nodes and the links that connect some pairs of nodes are called edges.

The processor 200 maps the base stations of the mobility area into nodes of a relation graph.

For that, the processor 200 determines whether two nodes are neighbouring nodes between which a handover is likely to take place.

An edge (i,j) is connecting the nodes i and j of the graph if the base station BSi is receiving signals from the base station BSj with signal to interference and noise ratio above a predefined threshold and/or the base station BSj is receiving signals from the base station BSi with signal to interference and noise ratio above a predefined threshold.

An edge (i,j) is connecting node i and j of the graph if the base station BSi is receiving signals from the base station BSj with a reference signals received power upper than a predefined threshold and/or the base station BSj is receiving signals from the base station BSi with a reference signals received power upper than a predefined threshold.

An edge (i,j) is connecting node i and j of the graph if at least one mobile terminal attached to the base station BSi is receiving signals from the base station BSj with a signal to interference and noise ratio above a predefined threshold and/or at least one mobile terminal attached to the base station BSj is receiving signals from the base station BSi with a signal to interference and noise ratio above a predefined threshold.

An edge (i,j) is connecting node i and j of the graph if at least one mobile terminal attached to the base station BSi is receiving signals from the base station BSj with reference signals received power above a predefined threshold and/or at least one mobile terminal attached to the base station BSj is receiving signals from the base station BSi with reference signals received power above a predefined threshold.

The processor 200 determines weights w(i,j) for each determined edge (i,j) of the graph, weights represent the parameters related to of data forwarding between two neighbouring nodes.

For example, the weight w(i,j) associated to the edge (i,j) is the maximum of the delays for data forwarding from base station BSi to base station BSj and from base station BSj to base station BSi.

For example, the weight w(i,j) associated to the edge (i,j) is the maximum of a first and a second calculated products. The first product is the multiplication of the delay for data forwarding from base station BSi to BSj by the delay of performing an handover from base station BSi to BSj. The second product is the multiplication of the delay for data forwarding from base station BSj to BSi by the delay of performing an handover from base station BSj to BSi.

For example, the weight w(i,j) associated to the edge (i,j) is a convex function of the delays for the tunnels establishment and the delays for path switch from base station BSi to the base station BSj or is a convex function of the delays for the tunnels establishment and the delays for path switch to from base station BSj to the base station BSi.

For example, the weight w(i,j) associated to the edge (i,j) is obtained from the average mobility gradients and delay for data forwarding between the base stations BSi and BSj.

At next step S401, the processor 200 determines a metric for each node of the graph and determines the base stations acting as mobility anchors and the data forwarding base stations. The metric is named hereinafter centrality metric.

Most central base stations may be chosen as the base stations acting as mobility anchors.

For example, the centrality metric for the node i is the average normalized number of shortest paths from one node s to one node t passing through the node i. The shortest path is determined from the sum of the weights associated to the edges of a path. The shortest path is one having the minimum sum value. The averaging is performed over all the pairs of different nodes of the topology and the normalization is performed over the total number of shortest path from node s to node t. The centrality metric of node i may be written as:

$$C_B(i) = \sum_{s,t \neq i} \frac{\sigma_{st}(i)}{\sigma_{st}}$$

where $\sigma_{st}(i)$ is the number of shortest paths from node s to node t that are passing through the node i and $\sigma_{st}$ is the total number of shortest paths from node s to node t.

The sum of the centrality relation is performed over all distinct pairs of nodes in the graph.

For example, the centrality metric is the inverse of the average of the minimum distance from the node i to any other node in the graph. The minimum distance is defined as the minimum length of any path connecting two nodes. The minimum distance is determined from the sum of the weights associated to the edges of a path. The minimum is one having the minimum sum value. The average is calculated over the nodes in the graph, that are different from the node i.

The centrality metric of node i may be written as:

$$C_C(i) = \frac{1}{\sum_{t \neq i} d_G(i,t)}$$

where $d_G(i,t)$ is the distance between the nodes i and t in the graph.

For example, the centrality metric is the inverse of the maximum over all minimum distances from the node i to any other node in the graph. The distance of a path is determined from the sum of the weights associated to the edges of the path.

The graph centrality for a node i may be given as

$$C_G(i) = \frac{1}{\max_{t \neq i} d_G(i,t)}.$$

For example, the centrality metric is an eigenvector of a global topology matrix, obtained from mobility parameters and or data forwarding costs.

The centrality metric may be defined as the value of the maximum eigenvector of the adjacency matrix $A$ of the graph, that is associated to the maximum positive eigenvalue of the adjacency matrix $A$.

$C_E(i) = v_{max}(i)$ The adjacency matrix $A$ is defined as the following: the element $A(i,j)$ is defined as $A(i,j) = w(i,j)$ if the node i and node j are connected by an edge in the graph. if the node i and node j are not connected by an edge in the graph, $A(i,j) = 0$.

The maximum positive eigenvector $v_{max}$ is given as a solution of the following eigenvalue equation :

$$A\underline{v}_{max} = \lambda_{max} \underline{v}_{max}$$

With $\lambda_{max}$ is the maximum positive solution of the following equation

$$\det(A - \lambda I) = 0$$

The function det(.) is the determinant function and the matrix $I$ is the identity matrix, i.e. matrix of zeros with diagonal elements set to 1.

A next step S402, the processor 200 determines the base stations acting as mobility anchors and the data forwarding base stations.

From the determined centrality metrics, the processor 200 selects the base stations acting as mobility anchors.

The base stations acting as mobility anchors are chosen as the one corresponding to the nodes with the highest centrality metrics in the network.

The base stations acting as mobility anchors are chosen as the one corresponding to the nodes having the centrality metric value upper than a predetermined value.

In case centrality metric values are similar, the base stations corresponding to the nodes with those centrality metrics are chosen as acting as mobility anchors.

The data forwarding base station are chosen as the ones corresponding to the nodes with the lowest centrality metric among the nodes of the graph or having the centrality metric value lower than a predetermined value.

Data forwarding base station for the mobility anchor node i are determined for example as the closest 1-hop neighbors of the node i allocated as data forwarding nodes based on the centrality metric. One hope neighbors are nodes linked by one edge.

At next step S403, the processor 200 determines mobility areas.

The initial size of the mobility areas is setup by the core network based on the expected traffic in the network as the following: the network coverage area is split by the management entity ME into large mobility areas if the traffic is low. If the traffic intensity is high, the network coverage area is split by the management ME into small mobility areas.

At next step S404, the processor 200 checks if the topology needs to be updated.

The topology is updated based on the actual variation of the traffic and/or the topology. This topology update step may be triggered by traffic metrics (traffic intensity change in the region), QoS metrics (variation of the average QoS perceived in the mobility region) or topology metrics (addition or deletion of new nodes from the network).

If the topology needs to be updated, the processor 200 returns to step S402, otherwise the processor 200 interrupts the present algorithm.

**Fig. 5** discloses an example of an algorithm executed by a management entity according to the second mode of realization of the present invention.

More precisely, the present algorithm is executed by the processor 200 of the management entity ME.

At step S500, the processor 200 determines the wireless cellular telecommunication network topology using a graph and edges as disclosed in reference to Fig.

4.

The processor 200 maps the base stations of the mobility area into nodes of a relation graph.

For that, the processor 200 determines whether two nodes are neighbouring nodes between which a handover is likely to take place.

The processor 200 determines weights $w(i,j)$ for each determined edge $(i,j)$ of the graph, weights represent the parameters related to data forwarding between two neighbouring nodes.

Weights are determined as disclosed in reference to Fig. 4.

At next step S501, the processor 200 determines a centrality metric for each node of the graph.

Most central base stations may be chosen as the base stations acting as mobility anchors.

Centrality metrics are determined as disclosed in reference to Fig. 4.

At next step S502, the processor 200 transfers to each base station the centrality metric for the base station.

**Fig. 6** discloses an example of an algorithm executed by a base station according to the second mode of realization of the present invention.

More precisely, the present algorithm is executed by the processor 300 of each base station.

At step S600, the processor 300 receives, from the management entity ME, the centrality metric of the base station.

At next step S601, the processor 300 transfers to the base stations with which a handover of a mobile terminal handled by the base station has been performed, the centrality metric, receives at step S600 and receives from the base stations to which the centrality metric is transferred their centrality metrics.

At next step S602, the processor 300 determines the base station acting as mobility anchors and the data forwarding base stations.

From the centrality metrics obtained at step S600 and S601, the processor 300 selects the base station acting as mobility anchor and/or data forwarding base stations.

The base station acting as mobility anchor is chosen as the one corresponding to the base station with the highest centrality metrics in the network.

The base station acting as mobility anchors is chosen as the one corresponding to the nodes having the centrality metric value upper than a predetermined value.

In case centrality metric values are similar, the base stations corresponding to the nodes with those centrality metrics are chosen as acting as mobility anchors.

The data forwarding base stations are chosen as the one corresponding to the nodes with the lowest centrality metric among the nodes of the graph or having the centrality metric value lower than a predetermined value.

At next step S603, the processor 300 determines the mobility area.

The mobility area comprises, for example, the base stations with which a handover of a mobile terminal handled by the base station has been performed and comprises at least one mobility anchor base station.

At next step S604, the processor 600 checks if the topology needs to be updated.

The topology is updated based on the actual variation of the traffic and/or the topology. This topology update step may be triggered by traffic metrics (traffic intensity change in the region), quality of service (QoS) QoS metrics (variation of the average QoS perceived in the mobility region) or topology metrics (addition or deletion of new nodes from the network).

If the topology needs to be updated, the processor 300 moves to step S605. Otherwise the processor 300 interrupts the present algorithm.

At step S605, the processor 300 determines, for the base stations with which a handover of a mobile terminal handled by the base station has been performed, the network topology using a graph and edges as disclosed in reference to Fig. 4 and centrality metrics as disclosed at step S401 of Fig. 4.

After that, the processor 300 returns to step S602.

Fig. 7 discloses an example of an algorithm executed by a base station according to the third mode of realization of the present invention.

More precisely, the present algorithm is executed by the processor 300 of each base station.

At step S700, the processor 300 determines for the wireless cellular telecommunication network or for a part of the wireless cellular telecommunication network, network topology using a graph and edges as disclosed in reference to Fig. 4.

The processor 300 maps the base stations of the mobility area into nodes of a relation graph.

For that, the processor 300 determines whether two nodes are neighbouring nodes between which a handover is likely to take place.

The processor 300 determines weights $w(i,j)$ for each determined edge $(i,j)$ of the graph, weights represent the parameters related to data forwarding between two neighbouring nodes.

Weights are determined as disclosed in reference to Fig. 4.

At next step S701, the processor 200 determines a centrality metric for each node of the graph.

Most central base stations may be chosen as the base stations acting as mobility anchors.

Centrality metrics are determined as disclosed in reference to Fig. 4.

At next step S702, the processor 300 transfers to the base stations associated to the nodes of the graph determined at step S700 the centrality metrics determined at step S701 and receives from the base stations to which the centrality metrics are transferred the centrality metrics they have determined,

At next step S702, the processor 300 determines the base station acting as mobility anchors and the data forwarding base stations.

From the centrality metrics obtained at steps S701 and S702, the processor 300 selects the base station acting as mobility anchor.

The base stations acting as mobility anchors are selected as the one corresponding to the base station with the highest centrality metrics in the network.

The base stations acting as mobility anchors are chosen as the one corresponding to the nodes having the centrality metric value upper than a predetermined value.

In case centrality metric values are similar, the base stations corresponding to the nodes with those centrality metrics are chosen as acting as mobility anchors.

The data forwarding base stations are chosen as the ones corresponding to the nodes with the lowest centrality metric among the nodes of the graph or having the centrality metric value lower than a predetermined value.

At next step S704, the processor 300 determines the mobility areas.

The mobility areas determination is performed as disclosed in reference to Fig. 4.

At next step S705, the processor 300 checks if the topology needs to be updated.

The topology is updated based on the actual variation of the traffic and/or the topology. This topology update step may be triggered by traffic metrics (traffic intensity change in the region), QoS metrics (variation of the average QoS perceived in the mobility region) or topology metrics (addition or deletion of new nodes from the network).

If the topology needs to be updated, the processor 300 moves to step S706. Otherwise the processor 300 interrupts the present algorithm.

At step S706, the processor 300 determines, for the base stations with which a handover of a mobile terminal handled by the base station has been performed, the network topology using a graph and edges as disclosed in reference to Fig. 4 and centrality metrics as disclosed at step S401 of Fig. 4.

After that, the processor 300 returns to step S703.

Naturally, many modifications can be made to the embodiments of the invention described above without departing from the scope of the present invention.

**Claims**

1. Method for managing routing of packets in a wireless cellular telecommunication network, the packets being related to a data communication for at least one mobile terminal, **characterized in that** the method comprises the steps of:

   - determining a graph representing the topology of the wireless cellular telecommunication network, the graph being formed of nodes associated to base stations of the wireless cellular telecommunication network and of edges having associated weights and linking the nodes,
   - determining metrics for the nodes, the metrics being determined from the weights,
   - selecting, for routing the packets, base stations acting as mobility anchors and data forwarding base stations from the determined metrics,
   - determining mobility areas for the mobility anchors.

2. Method according to claim 1, **characterized in that** the method comprises further steps of:

   - checking if a topology update needs to be performed and if a topology update, the method comprises further steps of :
   - selecting base stations acting as mobility anchors and data forwarding base stations from the determined metrics,
   - determining mobility areas for the mobility anchors.

3. Method according to claim 1 or 2, **characterized in that** the method is executed by a management entity of the wireless cellular telecommunication network.

4. Method according to claim 1, **characterized in that** the steps of determining the graph, the metrics are executed by a management entity of the wireless cellular telecommunication network and the steps of selecting base stations and determining mobility areas are executed by the base stations.

5. Method according to claim 1, **characterized in that** the method is executed by the base stations.

6. Method according to any of the claims 1 to 5, **characterized in that** an edge (i,j) is connecting two nodes of the graph representing the topology if the associated base station to the node i is receiving signals from the base station associated to the node j with signal to interference and noise ratio above a predefined threshold and/or the base station associated to the node j is receiving signals from the base station associated to the node i with signal to interference and noise ratio above a predefined threshold or an edge (i,j) is connecting two nodes of the graph if the associated base station to the node i is receiving signals from the base station associated to the node j with a reference signals received power upper than a predefined threshold and/or the base station associated to the node j is receiving signals from the base station associated to the node i with a reference signals received power upper than a predefined threshold or an edge (i,j) is connecting two nodes of the graph if at least one mobile terminal attached to the base station associated to the node i is receiving signals from the base station associated to the node j with a signal to interference and noise ratio above a predefined threshold and/or at least one mobile terminal attached to the base station associated to the node j is receiving signals from the base station associated to the node i with a signal to interference and noise ratio above a predefined threshold or if at least one mobile terminal attached to the base station associated to the node i is receiving signals from the base station associated to the node j with reference signals received power above a predefined threshold and/or at least one mobile terminal attached to the base station associated to the node j is receiving signals from the base station associated to the node i with reference signals received power above a predefined threshold.

7.  Method according to claim 6, **characterized in that** weight associated to the edge (i,j) of the graph represents the parameters related to data forwarding between the base stations associated to the nodes i and j.

8.  Method according to claim 7, **characterized in that** the weight w(i,j) associated to the edge (i,j) is the maximum of the delays for data forwarding from base station associated to the node i to the base station associated to the node j and from base station associated to the node j to base station associated to the node i or the weight w(i,j) associated to the edge (i,j) is the maximum of a first and a second calculated products. The first product is the multiplication of the delay for data forwarding from base station associated to the node i to associated to the node j by the delay of performing an handover from the base station associated to the node i to associated to the node j and the second product is the multiplication of the delay for data forwarding from base station associated to the node j to the base station associated to the node i by the delay of performing an handover from the base station associated to the node j to the base station associated to the node j or the weight w(i,j) associated to the edge (i,j) is a convex function of the delays for tunnels establishment and delays for path switch from base station associated to the node i to the base station associated to the node j or is a convex function of the delays for tunnels establishment and delays for path switch to from base station associated to the node j to the base station associated to the node i or the weight w(i,j) associated to the edge (i,j) is obtained from the average mobility gradients and delay for data forwarding between the base stations associated to the nodes i and j.

9.  Method according to claim 8, **characterized in that** the metric for the node i is the average normalized number of shortest paths from one node s to one node t passing through the node i, the shortest path for the node i being determined from the sum of the weights associated to the edges of the path or the metric is for the node i the inverse of the average of the minimum distance from the node i to any other node in the graph, the minimum distance being determined from the sum of the weights associated to the edges of a path or that the metric for the node i is the inverse of the maximum over all minimum distances from the node i to any other node in the graph, the distance of a path being determined from the sum of the weights associated to the edges of the path or the metric for the node i is an eigenvector of a global topology matrix, obtained from mobility parameters and/or data forwarding costs.

10. Method according to claim 9, **characterized in that** the base stations acting as mobility anchors are chosen as the ones corresponding to the nodes having the metric value upper than a predetermined value.

11. Method according claim 9 or 10, **characterized in that** the data forwarding base stations are chosen as the ones corresponding to the nodes with the lowest metric among the nodes of the graph or having the metric value lower than a predetermined value.

12. System for managing routing of packets in a wireless cellular telecommunication network, the packets being related to a data communication for at least one mobile terminal, **characterized in that** the system comprises :

    - means for determining a graph representing the topology of the wireless cellular telecommunication network, the graph being formed of nodes associated to base stations of the wireless cellular telecommunication network and of edges having associated weights and linking the nodes,
    - means for determining metrics for the nodes, the metrics being determined from the weights,
    - means for selecting, for routing the packets, base stations acting as mobility anchors and data forwarding base stations from the determined metrics,
    - means for determining mobility areas for the mobility anchors.

13. Computer program which can be directly loadable into a programmable device, comprising instructions or portions of code for implementing the steps of the method according to claims 1 to 11, when said computer program is executed on a programmable device.

Fig. 1

ME

| | |
|---|---|
| 200 Processor | Network I/F 204 |
| 203 RAM | |
| 202 ROM | 201 |

Fig. 2

BS

| | |
|---|---|
| 300 Processor | Network I/F 304 |
| 303 RAM | Wireless I/F 305 |
| 302 ROM | 301 |

Fig. 3

S400 — Determination of network topology

S401 — Determination of centrality of metrics

S402 — Determination anchors/ forwarding BS

S403 — Determination of mobility areas

S404 — Topology update ?

Fig. 4

S500 — Determination of network topology

S501 — Determination of centrality of metrics

S502 — Transfer

## Fig. 5

S600 — Receive centrality metrics

S601 — Exchange centrality metrics

S602 — Determination of anchors/ forwarding BS

S603 — Determination of mobility areas

S604 — Topology update ?

S605 — Determination of network topology

## Fig. 6

S700 — Determination of
network topology

S701 — Determination of
centrality of metrics

S702 — Exchange
centrality metrics

S703 — Determination of
anchors/ forwarding BS

S704 — Determination of
mobility areas

S706 — Determination of
network topology

S705 — Topology
update ?

Fig. 7

**Europäisches Patentamt**
**European Patent Office**
**Office européen des brevets**

## EUROPEAN SEARCH REPORT

Application Number

EP 15 16 1940

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/085560 A1 (INTERDIGITAL PATENT HOLDINGS [US]) 5 June 2014 (2014-06-05) * figures 8a,8b * * paragraphs [0089], [0090], [0094] * ----- | 1-13 | INV. H04W40/26 H04W36/22 ADD. H04W40/24 H04W84/18 |

TECHNICAL FIELDS SEARCHED (IPC)

H04W

The present search report has been drawn up for all claims

| Place of search | Date of completion of the search | Examiner |
|---|---|---|
| The Hague | 15 September 2015 | Tsuchiya, Kuni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 15 16 1940

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2015

| Patent document cited in search report | Publication date | Patent family member(s) | Publication date |
|---|---|---|---|
| WO 2014085560 A1 | 05-06-2014 | EP 2926594 A1<br>WO 2014085560 A1 | 07-10-2015<br>05-06-2014 |

EPO FORM P0459

For more details about this annex : see Official Journal of the European Patent Office, No. 12/82